# EUROPÄISCHE PATENTSCHRIFT

(11) **EP 2 417 373 B1**
(45) Veröffentlichungstag und Bekanntmachung des Hinweises auf die Patenterteilung: **03.12.2014**
(21) Anmeldenummer: 10716777.7
(22) Anmeldetag: 30.03.2010
(51) Int. Cl.: F16D 29/00

(54) **GETRIEBEVORRICHTUNG MIT WENIGSTENS EINEM ÜBER EINE AKTORIK BETÄTIGBAREN SCHALTELEMENT**
TRANSMISSION DEVICE HAVING AT LEAST ONE SHIFT ELEMENT THAT CAN BE ACTUATED BY MEANS OF AN ACTUATOR
BOÎTE DE VITESSES COMPORTANT AU MOINS UN ÉLÉMENT DE CHANGEMENT DE VITESSE POUVANT ÊTRE ACTIONNÉ PAR UN SYSTÈME D'ACTIONNEMENT

(30) Priorität: 07.04.2009 DE 102009002261
(43) Veröffentlichungstag der Anmeldung: 15.02.2012
(73) Patentinhaber: ZF Friedrichshafen AG, 88038 Friedrichshafen (DE)
(72) Erfinder: REISCH, Matthias, 88214 Ravensburg (DE); MOHR, Mark, 88069 Tettnang (DE)
(86) Internationale Anmeldenummer: PCT/EP2010/054182
(87) Internationale Veröffentlichungsnummer: WO 2010/115772

(56) Entgegenhaltungen:
- WO-A1-2005/078303
- WO-A1-2008/046737
- DE-A1- 10 337 909
- DE-A1- 10 342 013
- DE-A1-102006 014 866
- US-A1- 2003 057 050

## Beschreibung

Die Erfindung betrifft eine Getriebevorrichtung mit wenigstens einem über eine mindestens eine elektrische Komponente aufweisende Aktorik betätigbaren Schaltelement gemäß der im Oberbegriff des Patentanspruches 1 näher definierten Art.

Eine solche Getriebevorrichtung ist beispielsweise aus der WO 2005/078303 bekannt. Aus der Praxis sind verschiedene Ausführungen zur automatisierten Betätigung von Reibkupplungen von Getriebevorrichtungen bekannt, die beispielsweise hinsichtlich der Art und Weise der Übertragung von Energie und Informationen zwischen gehäusefesten und rotierenden Getriebekomponenten gliederbar sind. Bei automatisierten Schaltgetrieben werden Kupplungen oftmals mechanisch betätigt, wobei Axialkräfte in der Regel von gehäusefesten Betätigungseinrichtungen mittels axial verschiebbaren Ein- bzw. Ausrücklagern auf die rotierenden Kupplungen übertragen werden.

Nachteilig dabei ist jedoch, dass im Bereich des Lagers eine Differenzdrehzahl auszugleichen ist und in Abhängigkeit der jeweils anliegenden Axialkraft mechanische Verluste auftreten, welche einen Wirkungsgrad der automatisierten Schaltgetriebe beeinträchtigt.

Lamellenkupplungen von Automatgetrieben werden üblicherweise über hydraulische Betätigungseinrichtungen in gewünschtem Umfang betätigt, wobei hierfür in der Regel ein gehäuseseitig erzeugter Hydraulikdruck mit Hilfe einer so genannten Drehölzuführung zu mit den Kupplungen mit rotierenden Hydraulikzylindern geführt wird.

Im Betrieb derartiger Getriebevorrichtungen tritt jeweils im Bereich des Dichtkontaktes der Drehölzuführung Reibung auf, die als Schleppmoment den

Wirkungsgrad einer Getriebevorrichtung verschlechtert. Darüber hinaus wird die jeweils im Bereich des Dichtkontaktes entstehende Reibwärme durch einen definierten Leckage-Fluidvolumenstrom abgeführt, der jedoch nur über eine zusätzliche Pumpenleistung einer Hydraulikpumpe der Getriebevorrichtung zur Verfügung stellbar ist. Die zusätzlich aufzubringende Pumpenleistung beeinträchtigt jedoch wiederum den Wirkungsgrad der Getriebevorrichtung, was jedoch unerwünscht ist.

Zur Reduzierung der vorbeschriebenen Schleppmomente werden Schaltelemente von Getriebevorrichtungen elektromagnetische Betätigungseinrichtungen zugeordnet, bei denen üblicherweise jeweils eine gehäuseseitig angeordnete, stromdurchflossene Spule durch ihr Magnetfeld ein mitrotierendes, axialbewegliches Kupplungsbauteil in gewünschtem Umfang bewegt.

Elektromagnetische Betätigungen von Schaltelementen bzw. Kupplungen sind jedoch durch einen unerwünscht hohen Stromverbrauch gekennzeichnet, der in ungünstigen Betriebszuständen eines Fahrzeugantriebsstranges ein Bordnetz eines Fahrzeuges unter Umständen stark belastet.

Bei einer durch einen geringeren Stromverbrauch gekennzeichneten Betätigung von Schaltelementen von Getriebevorrichtungen wird ein mit einer Getriebewelle mitrotierender elektrischer Steller, wie ein Magnet, eine elektrische Maschine oder dergleichen, von einer gehäusefesten Stromquelle über Schleifringe entsprechend mit Elektrizität versorgt.

Die für die Stromversorgung vorgesehenen Schleifringe benötigen jedoch einen unerwünscht hohen Bauraumbedarf und weisen aufgrund der dauernden Reibbelastung nur eine geringe Lebensdauer auf.

Aus der DE 10 2006 049 275 A1 ist eine Getriebevorrichtung mit wenigstens einem über wenigstens eine elektrische Komponente aufweisende Aktorik betätigbaren Schaltelement bekannt. Die elektrische Komponente ist mit einer Getriebewelle verbunden, die im Betrieb mit der Drehzahl der Getriebewelle rotiert und über eine elektrische Übertragungseinrichtung mit weiteren gehäusefest ausgeführten Komponenten der Getriebevorrichtung in Wirkverbindung steht. Über die Übertragungseinrichtung sind elektrische Energie und/oder Daten berührungslos mittels Induktion zwischen den gehäusefest ausgeführten Komponenten der Getriebevorrichtung und der wenigstens einen mit der Getriebewelle verbundenen elektrischen Komponente austauschbar.

Die Aktorik weist jedoch einen konstruktiv aufwendigen Aufbau auf und benötigt einen hohen Bauraumbedarf, der in Getriebevorrichtungen nur begrenzt zur Verfügung steht.

Der vorliegenden Erfindung liegt daher die Aufgabe zugrunde, eine Getriebevorrichtung zur Verfügung zu stellen, bei welcher Schaltelemente auf konstruktiv einfache und bauraumgünstige Art und Weise mit hohem Wirkungsgrad betätigbar sind.

Erfindungsgemäß wird diese Aufgabe mit einer Getriebevorrichtung mit den Merkmalen des Patentanspruches 1 gelöst.

Bei der erfindungsgemäßen Getriebevorrichtung mit wenigstens einem über eine mindestens eine elektrische Komponente aufweisende Aktorik betätigbaren Schaltelement ist die elektrische Komponente mit einer Getriebewelle verbunden, rotiert im Betrieb mit der Drehzahl der Getriebewelle und steht über eine elektrische Übertragungseinrichtung mit weiteren Komponenten der Getriebevorrichtung in Wirkverbindung. Über die Übertragungseinrichtung ist zumindest elektrische Energie induktiv zwischen den Komponenten der Getriebevorrichtung und der wenigstens einen mit der Getriebewelle verbundenen elektrischen Komponente austauschbar, insbesondere in Richtung von einem ortsfesten zu einem rotierenden Bauteil übertragbar.

Erfindungsgemäß ist über die elektrische Komponente ein hydraulischer Betätigungsdruck zum Betätigen des Schaltelementes erzeugbar. Die hydraulische Betätigung des Schaltelementes bietet auf einfache Art und Weise die Möglichkeit, die Aktorik konstruktiv einfach und bauraumgünstig auszuführen, da eine das Schaltelement mit Betätigungsdruck beaufschlagende hydraulische Übertragungsstrecke im Wesentlichen lediglich eine nur wenig Bauraum beanspruchende Hydraulikleitung umfasst, die in bereits vorhandenen Bauelementen der Getriebevorrichtung verlaufend vorsehbar ist.

Bei einer konstruktiv einfachen und kostengünstigen Weiterbildung der erfindungsgemäßen Getriebevorrichtung umfasst die elektrische Komponente eine eine Pumpeneinrichtung antreibende elektrische Maschine, die bei einer weiteren vorteilhaften Ausführungsform über eine Getriebeeinrichtung miteinander verbunden sind, um die elektrischen Komponente mit einer geringen Leistungsaufnahme und einen geringen Bauraumbedarf sowie mit einem niedrigen Energiebedarf betreiben zu können.

Eine ebenfalls konstruktiv einfache und kostengünstige Ausführungsform der erfindungsgemäßen Getriebevorrichtung ist mit einer Pumpeneinrichtung ausgebildet, die wenigstens ein in einem Kolbenelementraum axial verschiebbares Kolbenelement aufweist, welches durch eine Antriebswandlereinrichtung, in deren Bereich der rotatorische Antrieb der elektrischen Maschine in eine translatorische Antriebsbewegung des Kolbenelementes umwandelbar ist, in einem den Betätigungsdruck für das Schaltelement zur Verfügung stellenden Umfang betätigbar ist.

Eine kostengünstig herstellbare und bauraumgünstige Ausführungsform der Antriebswandlereinrichtung umfasst eine Spindel-Mutter-Anordnung.

Um eine thermische Belastung der elektrischen Komponente der Aktorik zu vermeiden, ist bei einer vorteilhaften Ausführungsform der erfindungsgemäßen Getriebevorrichtung zumindest zwischen der elektrischen Komponente und dem Schaltelement eine thermische Isolationseinrichtung vorgesehen.

Weitere Vorteile und vorteilhafte Weiterbildungen der Erfindung ergeben sich aus den Patentansprüchen und dem unter Bezugnahme auf die Zeichnung prinzipmäßig beschriebenen Ausführungsbeispiel.

Es zeigt:
- Fig. 1: eine Teillängsschnittansicht einer erfindungsgemäßen Getriebevorrichtung; und
- Fig. 2: eine stark schematisierte Querschnittansicht der Getriebevorrichtung gemäß Fig. 1.

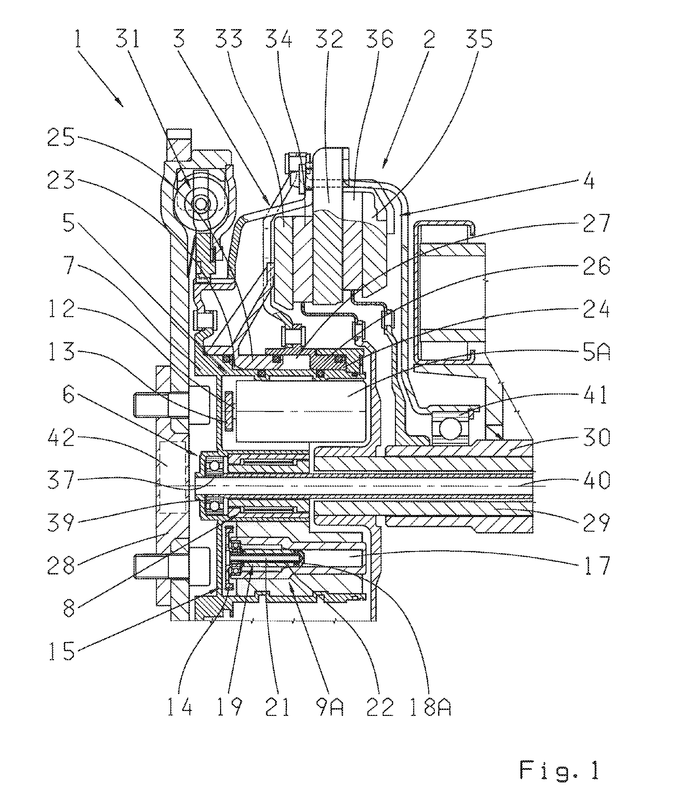

In Fig. 1 ist eine als Doppelkupplungsgetriebe ausgeführte Getriebevorrichtung 1 mit einer getriebeeingangsseitig angeordneten Doppelkupplungseinrichtung 2 in einer Teillängsschnittansicht dargestellt. Die Doppelkupplungseinrichtung 2 umfasst ein erstes reibschlüssiges Schaltelement 3 und ein zweites reibschlüssiges Schaltelement 4, die über eine eine elektrische Komponente 5 aufweisende Aktorik 6 in der später beschriebenen Art und Weise betätigbar sind.

Über die Doppelkupplungseinrichtung 2 ist eine Kurbelwelle 28 einer Brennkraftmaschine eines nicht näher dargestellten Fahrzeugantriebsstranges mit einer ersten Getriebeeingangswelle 29 bzw. einer zweiten Getriebeeingangswelle 30 wechselweise in Wirkverbindung bringbar, um ein Drehmoment der Brennkraftmaschine jeweils über einen ersten oder einen zweiten Leistungspfad der Getriebevorrichtung 1 vom Getriebeeingang in Richtung des Getriebeausganges führen zu können. Zur Reduzierung von Drehungleichförmigkeiten der Brennkraftmaschine ist zwischen der Kurbelwelle 28 und der Getriebewelle 7 eine Torsionsschwingungsdämpfereinrichtung 31 vorgesehen.

Die elektrische Komponente 5 umfasst vorliegend zwei elektrische Maschinen 5A, 5B, die mit einer Getriebewelle 7 drehfest verbunden sind, im Betrieb mit der Drehzahl der Getriebewelle 7 rotieren und über eine elektrische Übertragungseinrichtung 8 mit weiteren Komponenten der Getriebevorrichtung 1 in Wirkverbindung stehen. Das bedeutet, dass eine Energie- und Steuersignalübertragung bzw. eine Datenübertragung zwischen vorzugsweise gehäusefest ausgeführten Bauteilen der Getriebevorrichtung 1 und den drehfest mit der Getriebewelle 7 verbundenen elektrischen Maschinen 5A und 5B über die vorliegend auf Induktionsbasis arbeitenden Übertragungseinrichtung 8 erfolgt.

Über die induktive Übertragungseinrichtung 8 werden sowohl die zum Antreiben der elektrischen Maschinen 5A und 5B erforderliche Antriebsenergie als auch die erforderlichen Steuersignale, das heißt Soll- und Istwerte berührungslos mit gehäusefesten Bauteilen der Getriebevorrichtung 1 und vorzugsweise auch mit weiteren drehbaren Getriebeelementen der Getriebevorrichtung 1 bidirektional ausgetauscht.

Die einen Drehübertrager darstellende Übertragungseinrichtung 8 ist vorliegend bauraumgünstig im Inneren der Doppelkupplungseinrichtung 2 angeordnet. Darüber hinaus ist ein gehäusefester Teil 8A der Übertragungseinrichtung 8 über ein Verlängerungselement 37 in einem gehäusefesten Bauteil 38 gelagert, welches anderenends über eine Lagereinrichtung 39 in der Doppelkupplungseinrichtung 2 gelagert ist. Zusätzlich ist das Verlängerungselement 37 mit einer Zentralbohrung 40 ausgebildet, in der die nicht näher dargestellten elektrischen Verbindungsleitungen zwischen der Übertragungseinrichtung 8 und dem Bordnetz sowie dem Steuergerät führbar sind.

Die Doppelkupplungseinrichtung 2 ist über eine weitere Lagereinrichtung 41 auf der zweiten Getriebeeingangswelle 30 oder bei einer weiteren in der Zeichnung nicht näher dargestellten Ausführungsform der Getriebevorrichtung auf einem gehäusefesten Bauteil gelagert. Zusätzlich ist die Doppelkupplungseinrichtung 2 mit einem in der Zeichnung lediglich schematisiert dargestellten Pilotlager 42 in der Kurbelwelle 28 gelagert.

Bei einer weiteren in der Zeichnung nicht näher dargestellten Ausführungsform der Getriebevorrichtung wird die Betätigung der Schaltelemente der Doppelkupplungseinrichtung jeweils von Kompensationsfedern unterstützt und die Schaltelemente sind entweder als trockene oder ölgekühlte Kupplungen ausgebildet. Darüber hinaus besteht die Möglichkeit, die Schaltelemente jeweils derart auszuführen, dass die Schaltelemente in druckfreiem Zustand, das heißt, bei einem Betätigungsdruck gleich Null, vollständig geöffnet oder vollständig geschlossen sind.

Alternativ zu der induktiven Übertragung der Steuersignale ist es bei weiteren Ausführungsformen der Getriebevorrichtung 1 vorgesehen, die Steuersignale kapazitiv, optisch oder mittels anderer berührungsloser Übertragungswege zwischen dem mit der Getriebewelle 7 rotierenden elektrischen Komponenten der Aktorik und weiteren gehäusefesten und/oder mit Differenzdrehzahl zu den elektrischen Komponenten der Aktorik rotierenden Bauteilen der Getriebevorrichtung 1 zu übertragen.

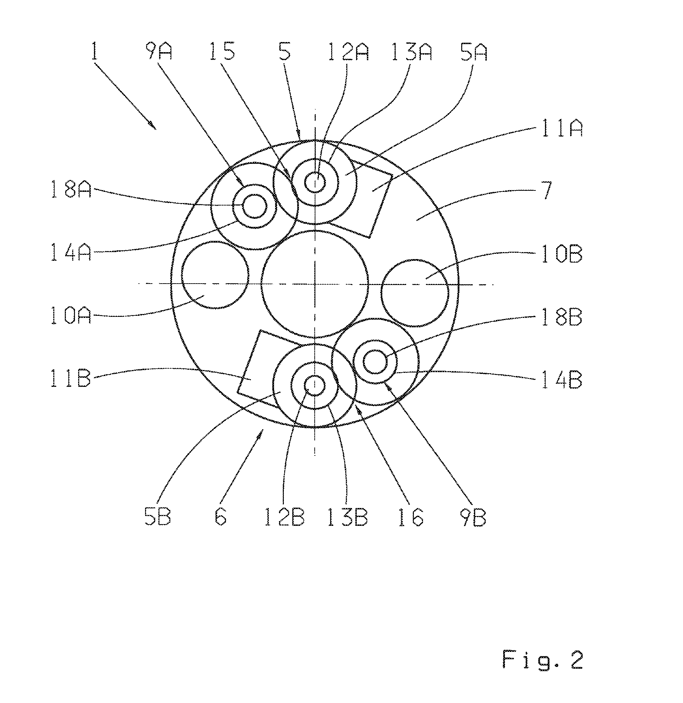

Fig. 2 zeigt eine stark schematisierte Querschnittansicht der Getriebevorrichtung 1 gemäß Fig. 1, die im Wesentlichen lediglich die einzelnen Bauelemente der Aktorik 6 in stark vereinfacht darstellt. Aus Fig. 2 geht hervor, dass die Aktorik 6 zwei im Wesentlichen identische Teilbereiche umfasst, welche jeweils die elektrischen Maschinen 5A und 5B und jeweils eine Pumpeneinrichtung 9A, 9B umfasst, die ebenfalls mit der Getriebewelle 7 drehfest verbunden sind. Neben den elektrischen Maschinen 5A, 5B und den Pumpeneinrichtungen 9A und 9B sind die baugleichen Teile der Aktorik 6 jeweils mit einem hydraulischen Fluidspeicher 10A, 10B sowie jeweils den elektrischen Maschinen 5A, 5B zugeordneten und drehfest mit der Getriebewelle 7 verbundenen Elektronikmodulen 11A und 11B ausgebildet.

Die Aktorik 6 wird vorliegend von einer gehäusefesten Energiequelle, das heißt dem Bordnetz eines Fahrzeuges, mit elektrischer Energie über die Übertragungseinrichtung 8 berührungslos versorgt. Zusätzlich werden die Elektronikmodule 11A und 11 B zur betriebszustandsabhängigen Betätigung der Doppelkupplungseinrichtung 2 über die elektrische Übertragungseinrichtung 8 von einem Steuergerät, welches im vorliegenden Fall das Getriebesteuergerät der Getriebevorrichtung 1 ist, mit den Steuer- und Regeldaten versorgt, wobei der Datenaustausch bidirektional, das heißt auch ausgehend von der Aktorik in Richtung des Steuergerätes, erfolgt.

Die elektrischen Maschinen 5A, 5B sind über mit Motorausgangswellen 12A, 12B der elektrischen Maschinen 5A, 5B verbundenen Zahnrädern 13A, 13B, die wiederum jeweils mit Pumpenzahnrädern 14A, 14B kämmen, mit den Pumpeneinrichtungen 9A, 9B wirkverbunden, wobei die Zahnräder 13A, 13B und die Pumpenzahnräder 14A und 14B jeweils Getriebeeinrichtungen 15, 16 zwischen den elektrischen Maschinen 5A, 5B und den Pumpeneinrichtungen 9A, 9B darstellen.

Die Pumpeneinrichtungen 9A, 9B weisen jeweils ein in einem Kolbenelementraum 17 axial verschiebbares Kolbenelement 18A, 18B auf, welche jeweils durch einer in Fig. 1 näher dargestellten Antriebswandlereinrichtung 19 entsprechende Antriebswandlereinrichtungen 19 in einem Betätigungsdruck für das Schaltelement 3 bzw. das Schaltelement 4 zur Verfügung stellenden Umfang betätigbar ist. Dabei sind jeweils im Bereich einer der Antriebswandlereinrichtungen 19 die rotatorischen Antriebe der elektrischen Maschinen 5A und 5B jeweils in eine translatorische Antriebsbewegung des Kolbenelementes 18A bzw. des Kolbenelementes 18B umwandelbar.

Die Antriebswandlereinrichtung 19 ist vorliegend als Spindel-Mutter-Anordnung ausgebildet, wobei die Pumpenzahnräder 14A, 14B jeweils mit einer im Inneren der Kolbenelemente 18A, 18B und koaxial zu diesen angeordneten Spindeln 21 drehfest verbunden sind. Die Kolbenelemente 18A und 18B stellen jeweils die Muttern der Spindel-Mutter-Anordnungen 20 der Pumpeneinrichtungen 9A und 9B dar. Durch eine selbsthemmende Auslegung der Spindel-Mutter-Anordnung ist es möglich die Reibkupplung stromlos auf einem vorgegebenen übertragbaren Drehmoment zu halten.

In der Zeichnung ist lediglich die Antriebswandlereinrichtung 19 Spindel 21 des die elektrische Maschine 5A umfassenden Teiles der Aktorik 6 dargestellt, weshalb in der weiteren Beschreibung der Funktionalität der Aktorik 6 im Wesentlichen auf den die Antriebswandlereinrichtung 19 umfassenden Teil der Aktorik Bezug genommen wird.

Die Spindel 21 der Antriebswandlereinrichtung 19 ist über ein Gewinde 22 mit dem Kolbenelement 18A derart wirkverbunden, dass der rotatorische Antrieb der elektrischen Maschine 5A in eine erste Drehrichtung zu einer Verkleinerung des Volumens des Kolbenelementraumes 17 und in eine dazu entgegengesetzte zweite Drehrichtung der elektrischen Maschine 5 zu einer Vergrößerung des Volumens des Kolbenelementraumes 17 führt. Der Kolbenelementraum 17 der Pumpeneinrichtung 9A ist vorliegend mit einem Kolbendruckraum des ersten Schaltelementes 3 der Doppelkupplungseinrichtung 2 verbunden. Gleichzeitig ist ein in der Zeichnung nicht näher dargestellter Kolbenelementraum der Pumpeneinrichtung 9B mit einem Kolbendruckraum 24 des zweiten Schaltelementes 4 verbunden, um das zweite Schaltelement 4 in der gleichen Art und Weise wie das erste Schaltelement 3 betätigen zu können.

Bei einer Verringerung des Kolbenelementraumes 17 der Pumpeneinrichtung 9A bzw. bei einer Volumenreduzierung des Kolbenelementraumes der Pumpeneinrichtung 9B wird jeweils der Druck im Kolbendruckraum 23 bzw. 24 des Schaltelementes 3 bzw. 4 erhöht. Damit sind die Übertragungsfähigkeiten der Schaltelemente 3 und 4 in gewünschtem Umfang zwischen einem vollständig geöffneten Betriebszustand, zu dem im Wesentlichen kein Drehmoment über die Schaltelemente 3 und 4 führbar ist, und einem vollständig geschlossenen Betriebszustand, zu dem ein jeweils anliegendes Drehmoment bis zu einer Drehmomentobergrenze vollständig übertragbar ist, stufenlos variierbar.

Zwischen Betätigungskolben 25, 26 der Schaltelemente 3, 4 ist ein gemeinsamer Druckausgleichsraum 27 vorgesehen, der neben den Kolbenelementräumen 17 der Pumpeneinrichtungen 9A, 9B mit den hydraulischen Fluidspeichern 10A, 10B verbunden ist, um einen jeweils die Funktionsweise des Schaltelementes 3 bzw. des Schaltelementes 4 beeinträchtigenden Druckaufbau aufgrund von Leckageströmen ausgehend von den Kolbendruckräumen 23 bzw. 24 in Richtung des Druckausgleichsraumes 27 auf einfache Art und Weise zu vermeiden.

Die Doppelkupplungseinrichtung 2 ist mit einer Zentralplatte 32 ausgebildet, welche jeweils ein Anschlagelement für das erste Schaltelement 3 und auch für das zweite Schaltelement 4 darstellt. Der Betätigungskolben 25 des ersten Schaltelementes 3 ist mit einer Andrückplatte 33 des ersten Schaltelementes 3 wirkverbunden und drückt bei entsprechendem Druck im Kolbendruckraum 23 eine zwischen der Andrückplatte 33 und der Zentralplatte 32 angeordnete Belagscheibe 34 des ersten Schaltelementes gegen die Zentralplatte 32, um die Übertragungsfähigkeit des ersten Schaltelementes 33 in Abhängigkeit des jeweils vorliegenden Betriebszustandes der Getriebevorrichtung 1 und einer entsprechenden steuergerätseitigen Vorgabe einzustellen.

Der Betätigungskolben 26 des zweiten Schaltelementes 4 übt bei entsprechendem Betätigungsdruck im Kolbendruckraum 24 des zweiten Schaltelementes 4 eine entsprechende Anpresskraft auf eine Andrückplatte aus, welche eine zwischen der Zentralplatte 32 und der Andrückplatte 35 angeordnete Belagscheibe 36 des zweiten Schaltelementes 4 gegen die Zentralplatte 32 drückt, um das Schaltelement 4 mit der jeweils angeforderten Übertragungsfähigkeit darzustellen.

Sowohl das erste Schaltelement 3 als auch das zweite Schaltelement 4 werden jeweils in Abhängigkeit der anliegenden Betätigungskraft oder einer hierzu äquivalenten Betriebsgröße geregelt betrieben, wobei zur Ermittlung der jeweils vorliegenden Betätigungskraft jeweils ein Kraftsensor oder ein Drucksensor in der Betätigungskette der Aktorik 6 vorgesehen ist.

Die Kolbenelementräume 17 der Pumpeneinrichtungen 9A und 9B der Aktorik 6 sind jeweils mit den zugeordneten hydraulischen Fluidspeichern 10A und 10B derart verbunden, dass im jeweils druckfreien Betriebszustand der Kolbenelementräume 17 Hydraulikfluid aus den hydraulischen Fluidspeichern 10A, 10B in die Kolbenbetätigungsräume 17 nachströmen kann.

Der erfindungsgemäßen Getriebevorrichtung liegt jeweils der Vorteil zugrunde, dass die Energieübertragung von gehäusefesten Bauelementen auf rotierende Bauelemente im Wesentlichen schleppmoment- und verschleißfrei durchführbar ist. Des Weiteren weist die erfindungsgemäße Getriebevorrichtung eine kompakte Bauweise auf, da die für die Betätigung des Schaltelementes vorgesehene Aktorik in das Schaltelement selbst bzw. in die Getriebewelle integriert ist, auf welchem das Schaltelement angeordnet ist. Diese Ausführung ermöglicht es, das Schaltelement nach außen hin frei von Axialkräften darzustellen.

Zudem ist die bauraumgünstige und konstruktiv einfach ausgestaltete erfindungsgemäße Getriebevorrichtung im Vergleich zu aus der Praxis bekannten Getriebevorrichtungen jeweils mit einem besseren Wirkungsgrad betreibbar. Dies resultiert unter anderem aus der Tatsache, dass die Aktorik nur während der Betätigung des Schaltelementes bzw. der Betätigung der Schaltelemente Energie zuzuführen ist. Um eine über die Aktorik eingestellte Übertragungsfähigkeit des Schaltelementes oder der Schaltelemente aufrechtzuerhalten, ist im Wesentlichen keine Energie aufzuwenden, da die hydraulische Betätigungsstrecke der Aktorik ein geschlossenes System darstellt, welches im Betrieb lediglich eine energieeffiziente so genannte On-Demand-Energieaufnahme benötigt.

### Bezugszeichen

- 1: Getriebevorrichtung
- 2: Doppelkupplungseinrichtung
- 3: erstes reibschlüssiges Schaltelement
- 4: zweites reibschlüssiges Schaltelement
- 5: elektrische Komponente der Aktorik
- 5A, 5B: elektrische Maschine
- 6: Aktorik
- 7: Getriebewelle
- 8: elektrische Übertragungseinrichtung
- 8A: gehäusefester Teil der Übertragungseinrichtung
- 9A, B: Pumpeneinrichtung
- 10A, B: hydraulischer Fluidspeicher
- 11 A, B: Elektronikmodul
- 12A, B: Motorausgangswelle der elektrischen Maschine
- 13A, B: Zahnrad
- 14A, B: Pumpenzahnrad
- 15, 16: Getriebeeinrichtung
- 17: Kolbenelementraum
- 18A, B: Kolbenelement
- 19: Antriebswandlereinrichtung, Spindel-Mutter-Anordnung
- 21: Spindel
- 22: Gewinde
- 23, 24: Kolbendruckraum
- 25, 26: Betätigungskolben
- 27: Druckausgleichsraum
- 28: Kurbelwelle
- 29: erste Getriebeeingangswelle
- 30: zweite Getriebeeingangswelle
- 31: Torsionsschwingungsdämpfereinrichtung
- 32: Zentralplatte
- 33: Andrückplatte des ersten Schaltelementes
- 34: Belagscheibe des ersten Schaltelementes
- 35: Andrückplatte des zweiten Schaltelementes
- 36: Belagscheibe des zweiten Schaltelementes
- 37: Verlängerungselement
- 38: gehäusefestes Bauteil
- 39: Lagereinrichtung
- 40: Zentralbohrung
- 41: weitere Lagereinrichtung
- 42: Pilotlager

## Patentansprüche

1. Getriebevorrichtung (1) mit wenigstens einem über eine mindestens eine elektrische Komponente (5) aufweisende Aktorik (6) betätigbaren Schaltelement (3, 4), wobei die elektrische Komponente (5) mit einer Getriebewelle (7) verbunden ist, im Betrieb mit der Drehzahl der Getriebewelle (7) rotiert und über eine elektrische Übertragungseinrichtung (8) mit weiteren Komponenten der Getriebevorrichtung (1) in Wirkverbindung steht, und wobei über die elektrische Komponente (5) ein hydraulischer Betätigungsdruck zum Betätigen des Schaltelementes (3, 4) erzeugbar ist, **dadurch gekennzeichnet, dass** über die Übertragungseinrichtung (8) zumindest elektrische Energie induktiv zwischen den Komponenten der Getriebevorrichtung (1) und der wenigstens einen mit der Getriebewelle (7) verbundenen elektrischen Komponente (5) austauschbar ist, die elektrische Komponente (5) eine eine Pumpeneinrichtung (9A, 9B) antreibende elektrische Maschine (5A, 5B) umfasst und die Aktorik (6) einen hydraulischen Fluidspeicher (10A, 10B) aufweist, der mit einem Druckausgleichsraum (27) des Schaltelementes (3, 4) in Wirkverbindung bringbar ist.

2. Getriebevorrichtung nach Anspruch 1, **dadurch gekennzeichnet, dass** die weiteren Komponenten gehäusefest ausgeführt sind.

3. Getriebevorrichtung nach Anspruch 1 oder 2, **dadurch gekennzeichnet, dass** die Pumpeneinrichtung (9A, 9B) über eine Getriebeeinrichtung (15, 16) mit der elektrischen Maschine (5A, 5B) verbunden ist.

4. Getriebevorrichtung nach einem der Ansprüche 1 bis 3, **dadurch gekennzeichnet, dass** die Pumpeneinrichtung (9A, 9B) wenigstens ein in einem Kolbenelementraum (17) axial verschiebbares Kolbenelement (18A, 18B) aufweist, welches durch eine Antriebswandlereinrichtung (19), in deren Bereich der rotatorische Antrieb der elektrischen Maschine (5A, 5B) in eine translatorische Antriebsbewegung des Kolbenelementes (18A, 18B) umwandelbar ist, in einem den Betätigungsdruck für das Schaltelement (3, 4) zur Verfügung stellenden Umfang betätigbar ist.

5. Getriebevorrichtung nach Anspruch 4, **dadurch gekennzeichnet, dass** die Antriebswandlereinrichtung (19) als eine Spindel-Mutter-Anordnung ausgebildet ist.

6. Getriebevorrichtung nach einem der Ansprüche 1 bis 5, **dadurch gekennzeichnet, dass** ein Kolbendruckraum (23, 24) des Schaltelementes (3, 4) mit dem Betätigungsdruck beaufschlagbar ist.

7. Getriebevorrichtung nach einem der Ansprüche 4 bis 6, **dadurch gekennzeichnet, dass** der hydraulische Fluidspeicher (10A, 10B) zumindest nahe eines druckfreien Betriebszustandes des Kolbenelementraumes (17) mit dem Kolbenelementraum (17) in Wirkverbindung bringbar ist.

8. Getriebevorrichtung nach einem Ansprüche 1 bis 7, **dadurch gekennzeichnet, dass** der Druckausgieichraum (10A, 10B) einem weiteren Schaltelement (3, 4) zugeordnet ist.

9. Getriebevorrichtung nach einem der Ansprüche 1 bis 8, **dadurch gekennzeichnet, dass** die Aktorik mit einem Kraft- oder Drucksensor ausgebildet ist.

10. Getriebevorrichtung nach einem der Ansprüche 1 bis 9, **dadurch gekennzeichnet, dass** die Übertragungseinrichtung (8) im Inneren des Schaltelementes (3, 4) angeordnet ist.

11. Getriebevorrichtung nach einem der Ansprüche 1 bis 10, **dadurch gekennzeichnet, dass** eine Übertragung von Daten zwischen den weiteren Komponenten und der elektrischen Komponente (5) induktiv, kapazitiv oder optisch erfolgt.

12. Getriebevorrichtung nach einem der Ansprüche 1 bis 11, **dadurch gekennzeichnet, dass** zumindest zwischen der elektrischen Komponente und dem Schaltelement eine thermische Isolationseinrichtung vorgesehen ist.

## Claims

1. Transmission device (1) having at least one shift element (3, 4) actuable via an actuator (6) having at least one electrical component (5), the electrical component (5) being connected to a transmission shaft (7), rotating at the rotational speed of the transmission shaft (7) during operation and being operatively connected to further components of the transmission device (1) via an electrical transfer arrangement (8), and a hydraulic actuation pressure for actuating the shift element (3, 4) being capable of being generated via the electrical component (5), **characterized in that** at least electrical energy can be exchanged inductively via the transfer arrangement (8) between the components of the transmission device (1) and the at least one electrical component (5) connected to the transmission shaft (7), the electrical component (5) comprises an electric machine (5A, 5B) driving a pump arrangement (9A, 9B), and the actuator (6) has a hydraulic fluid accumulator (10A, 10B) which can be operatively connected to a pressure compensation space (27) of the shift element (3, 4).

2. Transmission device according to Claim 1, **characterized in that** the further components are designed to be fixed with respect to the housing.

3. Transmission device according to Claim 1 or 2, **characterized in that** the pump arrangement (9A, 9B) is connected to the electric machine (5A, 5B) via a gear arrangement (15, 16).

4. Transmission device according to one of Claims 1 to 3, **characterized in that** the pump arrangement (9A, 9B) has at least one piston element (18A, 18B) which is axially displaceable in a piston element space (17) which, by means of a drive converter arrangement (19), in the region of which the rotary drive of the electric machine (5A, 5B) can be converted into a translatory drive movement of the piston element (18A, 18B), can be actuated to an extent which makes available the actuation pressure for the shift element (3, 4).

5. Transmission device according to Claim 4, **characterized in that** the drive converter arrangement (19) is designed as a spindle/nut arrangement.

6. Transmission device according to one of Claims 1 to 5, **characterized in that** a piston pressure space (23, 24) of the shift element (3, 4) can be acted upon with the actuation pressure.

7. Transmission device according to one of Claims 4 to 6, **characterized in that** the hydraulic fluid accumulator (10A, 10B) can be operatively connected to the piston element space (17) at least near to a pressure-free operating state of the piston element space (17).

8. Transmission device according to one of Claims 1 to 7, **characterized in that** the pressure compensation space (10A, 10B) is assigned to a further shift element (3, 4).

9. Transmission device according to one of Claims 1 to 8, **characterized in that** the actuator is designed with a force or pressure sensor.

10. Transmission device according to one of Claims 1 to 9, **characterized in that** the transfer arrangement (8) is disposed inside the shift element (3, 4).

11. Transmission device according to one of Claims 1 to 10, **characterized in that** a transfer of data between the further components and the electrical component (5) takes place inductively, capacitively or optically.

12. Transmission device according to one of Claims 1 to 11, **characterized in that** a thermal insulation arrangement is provided at least between the electrical component and the shift element.

## Revendications

1. Boîte de vitesses (1) comportant au moins un élément de changement de vitesse (3, 4) actionnable via un système d'actionnement (6) comportant au moins un composant électrique (5), le composant électrique (5) étant relié à un arbre de boîte de vitesses (7), tournant en fonctionnement à la vitesse de rotation de l'arbre de boîte de vitesses (7) et en liaison active avec des composants supplémentaires de la boîte de vitesses (1) via un dispositif de transmission électrique (8) et une pression d'actionnement hydraulique pouvant être produite via le composant électrique (5) pour actionner l'élément de changement de vitesse (3, 4), **caractérisée en ce qu'**au moins l'énergie électrique peut être échangée de façon inductive via le dispositif de transmission (8), entre les composants de la boîte de vitesses (1) et l'au moins un composant électrique (5) relié à l'arbre de boîte de vitesses (7), le composant électrique (5) comprenant une machine électrique (5A, 5B) entraînant un dispositif de pompe (9A, 9B) et le système d'actionnement (6) comportant un accumulateur de fluide (10A, 10B) hydraulique pouvant être amené en liaison active avec une chambre de compensation de pression (27) de l'élément de changement de vitesse (3, 4).

2. Boîte de vitesses selon la revendication 1, **caractérisée en ce que** les composants supplémentaires sont réalisés de façon à être fixés au carter.

3. Boîte de vitesses selon la revendication 1 ou 2, **caractérisée en ce que** le dispositif de pompe (9A, 9B) est relié à la machine électrique (5A, 5B) via un dispositif de boîte de vitesses (15, 16).

4. Boîte de vitesses selon l'une quelconque des revendications 1 à 3, **caractérisée en ce que** le dispositif de pompe (9A, 9B) comporte au moins un élément de piston (18A, 18B) pouvant être coulissé dans le plan axial dans une chambre d'élément de piston (17), le mouvement dudit élément pouvant être converti par un dispositif de conversion d'entraînement (19), dans la zone de l'entraînement rotatif de la machine électrique (5A, 5B), en un mouvement d'entraînement par translation de l'élément de piston (18A, 18B) et ledit élément pouvant être actionné dans un périmètre de mise à disposition de la pression d'actionnement pour l'élément de changement de vitesse (3, 4).

5. Boîte de vitesses selon la revendication 4, **caractérisée en ce que** le dispositif de conversion d'entraînement (19) prend la forme d'un agencement vis-écrou.

6. Boîte de vitesses selon l'une quelconque des revendications 1 à 5, **caractérisée en ce qu'**une chambre de pression de piston (23, 24) de l'élément de tige (3, 4) peut être alimentée en pression d'actionnement.

7. Boîte de vitesses selon l'une quelconque des revendications 4 à 6, **caractérisée en ce que** l'accumulateur de fluide (10A, 10B) hydraulique peut être amené en liaison active avec la chambre d'élément de piston (17), au moins à proximité d'un état de fonctionnement sans pression de la chambre d'élément de piston (17).

8. Boîte de vitesses selon l'une quelconque des revendications 1 à 7, **caractérisée en ce que** la chambre de compensation de pression (10A, 10B) est associée à un élément de changement de vitesse (3, 4) supplémentaire.

9. Boîte de vitesses selon l'une quelconque des revendications 1 à 8, **caractérisée en ce que** le système d'actionnement est réalisé avec un capteur de pression ou d'effort.

10. Boîte de vitesses selon l'une quelconque des revendications 1 à 9, **caractérisée en ce que** le dispositif de transmission (8) est disposé à l'intérieur de l'élément de changement de vitesse (3, 4).

11. Boîte de vitesses selon l'une quelconque des revendications 1 à 10, **caractérisée en ce qu'**une transmission de données se produit de façon inductive, capacitive ou optique entre les composants supplémentaires et le composant électrique (5).

12. Boîte de vitesses selon l'une quelconque des revendications 1 à 11, **caractérisée en ce qu'**un dispositif d'isolation thermique est prévu au moins entre le composant électrique et l'élément de changement de vitesse.
